# FASCICULE DE BREVET EUROPEEN

(11) **EP 3 911 515 B1**
(45) Date de publication et mention de la délivrance du brevet: **04.01.2023**
(21) Numéro de dépôt: 20706567.3
(22) Date de dépôt: 14.01.2020
(51) Int. Cl.: B32B 17/10

(54) **INTERCALAIRE ACOUSTIQUE HYBRIDE CONSTITUÉ D'UNE COUCHE DE COEUR ADHÉSIVE EN NANOCOMPOSITES À MATRICE POLYMÈRE**
HYBRIDE AKUSTISCHE ZWISCHENSCHICHT BESTEHEND AUS EINER HAFTKERNSCHICHT, DIE AUS POLYMER-MATRIX-NANOKOMPOSITEN HERGESTELLT IST
HYBRID ACOUSTIC INTERLAYER CONSISTING OF AN ADHESIVE CORE LAYER MADE OF POLYMER-MATRIX NANOCOMPOSITES

(30) Priorité: 17.01.2019 FR 1900405
(43) Date de publication de la demande: 24.11.2021
(73) Titulaire: Saint-Gobain Glass France, 92400 Courbevoie (FR)
(72) Inventeur: BOUILLET, Fabien, 60200 Compiègne (FR); LUNA CORNEJO, Ollin Alan, 75012 Paris (FR)
(74) Mandataire: Saint-Gobain Recherche
(86) Numéro de dépôt international: PCT/FR2020/050046
(87) Numéro de publication internationale: WO 2020/148502

(56) Documents cités:
- EP-A1- 0 566 890
- FR-A1- 3 013 631
- US-A1- 2016 111 077

## Description

La présente invention concerne un intercalaire pour verres feuilletés ayant des propriétés d'amortissement vibratoire, ainsi que son procédé de fabrication. Elle concerne également un vitrage feuilleté comprenant un tel intercalaire ainsi que l'utilisation dudit vitrage comme pare-brise de véhicule et/ou comme vitrage de bâtiment pour amortir les vibrations et les bruits d'origine solidienne entre 1 Hz et 1000 Hz et/ou augmenter la perte de transmission aux bruits d'origine aérienne notamment sur la décade de fréquence audible comprise entre 1 kHz et 10 kHz.

Les vitrages feuilletés sont couramment utilisés dans le domaine des transports, et plus particulièrement dans les fenêtres de véhicules automobiles et d'avions, ainsi que dans le bâtiment. Le rôle des vitrages feuilletés est de supprimer le risque de projection de fragments en cas de casse brutale et de constituer un retardateur d'effraction. Les vitrages feuilletés présentent en outre les avantages de réduire la transmission de rayonnement UV et/ou infrarouge et de réduire la transmission des bruits de l'extérieur vers l'intérieur des véhicules ou du bâtiment permettant ainsi une amélioration du confort vibratoire et acoustique des passagers ou des occupants.

Les vitrages feuilletés sont généralement composés d'une première feuille de verre et d'une deuxième feuille de verre, entre lesquelles se trouve un intercalaire. Ces vitrages sont fabriqués par un procédé connu, par exemple par assemblage à chaud et sous pression.

Dans le cas d'un vitrage feuilleté ayant des propriétés d'amortissement vibratoire, il a été décrit un intercalaire tri-couche comprenant deux couches de poly(butyral de vinyle) (PVB de l'anglais PolyVinyl Butyral), également nommées « couches externes » ou « peaux », assemblées au moyen d'une couche de PVB, également nommée « couche interne » ou « cœur ». Le PVB de la couche interne présente une physico-chimie différente de celle du PVB des deux couches externes (voir par exemple, le brevet US N° 5 340 654, 5 190 826, US 2006/0210782, US2016/0111077 et US 2016/0171961). En effet, le PVB du cœur présente une teneur en hydroxyle (groupement -OH) résiduel inférieure à celle du PVB des peaux. La teneur en hydroxyle résiduel se réfère à la quantité de groupes hydroxyle restant en tant que groupes latéraux sur la chaîne vinylique du PVB après l'acétalisation du poly(alcool de vinyl) par le butyraldéhyde. La teneur en groupes hydroxyle plus élevée des couches externes de PVB se traduit par une compatibilité réduite avec le plastifiant, conduisant alors lors de l'étape d'autoclavage à une migration du plastifiant vers le PVB de la couche interne. Le plastifiant augmente la composante visqueuse et améliore ainsi les propriétés d'amortissement vibratoire de la couche interne viscoélastique, tandis que les couches externes sont rigides, assurant ainsi la manipulation et la résistance mécanique de l'intercalaire. Les couches externes rigides contribuent généralement très peu aux propriétés d'amortissement vibratoire.

Dans le but d'améliorer les performances d'isolation acoustique des vitrages feuilletés comprenant un intercalaire tri-couche tel que décrit ci-dessus, il a été envisagé de diminuer encore davantage la teneur en groupes hydroxyle résiduels du PVB de la couche interne afin d'augmenter sa teneur en plastifiant. Ceci a cependant conduit à un déplacement de la valeur de la température de transition vitreuse (Tg) du PVB du cœur vers de trop basses températures et par conséquent à un amortissement efficace des vibrations sur l'intervalle de fréquence d'intérêt entre 1 Hz et 10 kHz à une température inférieure à la température ambiante. L'amortissement vibratoire sur l'intervalle de fréquence d'intérêt se trouvait de ce fait réduit aux températures d'utilisation du vitrage.

Une augmentation de la teneur en groupes hydroxyle résiduels du PVB de la couche interne ainsi qu'une diminution de sa teneur en plastifiant ont également été envisagées. Cela a toutefois conduit à la diminution de la composante visqueuse du PVB du cœur et à un déplacement de la valeur de la température de transition vitreuse (Tg) dudit PVB vers de trop hautes températures, réduisant également le pouvoir d'amortissement des vibrations sur l'intervalle de fréquence d'intérêt à température ambiante.

Ces deux approches consistant à jouer sur la teneur en groupes hydroxyle de la couche interne de PVB des intercalaires ont ainsi abouti à une impasse liée à l'indésirable, mais inévitable, augmentation/diminution de la température de transition vitreuse (Tg).

L'idée à la base de la présente invention est de remplacer dans un intercalaire tri-couche, tel que défini ci-dessus, la couche interne de PVB par une couche formée d'une structure polymérique particulière, différente du PVB, présentant un facteur d'amortissement (tan δ) très élevé sur la décade de fréquence entre 1 kHz et 10 kHz, de préférence sur l'intervalle de fréquence comprise entre 1 Hz et 10 kHz, à des températures proches de la température ambiante.

Le système polymérique choisi par la Demanderesse est un système à deux phases polymériques : une première phase, *discontinue,* constituée de nanodomaines polymériques présentant une Tg particulière, comprise entre -50°C et -30°C, de préférence entre -45°C et -35°C et une deuxième phase polymérique, *continue,* présentant une Tg inférieure celle de ladite première phase. La première phase est dispersée dans la deuxième phase, cette dernière formant une sorte de matrice entourant les nanodomaines.

La Tg de ladite première phase est choisie de manière à ce que l'amortissement vibratoire soit maximal sur la décade de fréquence entre 1 kHz et 10 kHz, de préférence sur l'intervalle de fréquence comprise entre 1 Hz et 10 kHz, à une température comprise entre 0°C et 40°C, de préférence comprise entre 10°C et 30°C, plus préférentiellement comprise entre 15°C et 25°C et encore plus préférentiellement pour une température voisine ou égale à 20°C.

Par ailleurs, la Demanderesse a constaté que l'utilisation d'un système polymérique à base d'un réseau interpénétré de polymères (RIP) conduisait à un facteur de perte (tan delta), déterminé par analyse mécanique dynamique, qui avait une valeur élevée sur un domaine de fréquence vibratoire plus large que chacun des polymères formant ledit RIP.

La Demanderesse propose ainsi d'utiliser un système polymérique de type réseau interpénétré de polymères (RIP) pour former le cœur d'un intercalaire tri-couche pour verres feuilletés.

La Demanderesse propose en particulier d'utiliser un latex, c'est-à-dire une émulsion aqueuse de particules polymériques contenant une phase RIP pour former la couche interne d'un intercalaire tri-couche, destiné à la fabrication de vitrages feuilletés. Les deux couches externes de l'intercalaire peuvent être en poly(butyral de vinyle) (PVB) ou bien en poly(éthylène-acétate de vinyle) (EVA) qui peut remplacer le PVB dans certaines applications.

Le latex RIP est utilisé dans la présente invention pour coller entre elles les deux couches externes de l'intercalaire. Le latex RIP forme ainsi, après coalescence des particules polymériques, une couche adhésive dans laquelle les phases RIP restent visibles par microscopie électronique. Elles sont entourée d'une phase continue polymérique, appelée ci-après parfois matrice et qui assure la fonction adhésive de la couche interne. Le terme « nanocomposite » utilisé ci-après pour décrire la présente invention désigne cette structure polymérique constituée d'une matrice polymérique, ayant un caractère fortement adhésif, dans laquelle sont dispersées des nanoparticules ou nanodomaines polymériques, toujours visibles dans l'intercalaire après coalescence du latex.

La présente demande a donc pour premier objet un intercalaire pour verres feuilletés comprenant deux couches externes en un matériau choisi parmi le poly(butyral de vinyle) (PVB) et le poly(éthylène-acétate de vinyle) (EVA), assemblées au moyen d'une couche nanocomposite adhésive comprenant :
- une première phase discontinue constituée de nanodomaines polymériques présentant une température de transition vitreuse (Tg) comprise entre -50°C et -30°C, de préférence entre -45°C et -35°C, et
- une deuxième phase continue polymérique, appelée matrice, présentant une température de transition vitreuse (Tg) inférieure celle de ladite première phase, de préférence une Tg inférieure à -50°C et plus préférentiellement inférieure à -60°C, la première phase étant dispersée dans la deuxième phase.

Les deux couches externes de l'intercalaire sont de préférence des couches de poly(butyral de vinyle) (PVB).

La première phase du système polymérique choisi par la Demanderesse est constituée de nanodomaines polymériques formés de préférence par un réseau interpénétré de polymères (RIP). Cette première phase discontinue assurera, comme expliqué en introduction, le rôle d'amortisseur vibratoire sur la décade de fréquence comprise entre 1 kHz et 10 kHz, de préférence sur l'intervalle de fréquence comprise entre 1 Hz et 10 kHz, à température ambiante, tandis que la deuxième phase polymérique entourant lesdits nanodomaines forme une matrice continue autour de la première phase et aura essentiellement pour fonction de lier entre elles les nanoparticules de la première phase et de coller l'une à l'autre les deux couches externes de l'intercalaire de feuilletage.

Ainsi, le système polymérique choisi par la Demanderesse pour l'obtention de la couche interne de l'intercalaire tri-couche selon l'invention est formé de préférence à partir de latex. Dans la présente description, on entend par « latex », une dispersion de particules polymériques dans de l'eau ou dans un solvant aqueux. Selon l'invention, le latex comprend des particules polymériques présentant une structure noyau-enveloppe (en anglais *core-shell*) où :
- le noyau est formé d'un réseau interpénétré de polymères (RIP) ayant une température de transition vitreuse (Tg) comprise entre -50°C et -30°C, de préférence entre -45°C et -35°C, et
- l'enveloppe est formée d'un polymère ayant une Tg suffisamment basse pour permettre la coalescence des particules après séchage ; elle est inférieure à celle dudit noyau, et est de préférence inférieure à -50°C, et plus préférentiellement inférieure à - 60°C.

Le noyau formé d'un réseau interpénétré de polymères dénommé RIP (en anglais IPN pour Interpenetrated Polymer Network) selon l'invention est obtenu par deux polymérisations séquentielles. Le RIP comprend ainsi un premier polymère (P1) réticulé et un deuxième polymère (P2), qui peut être réticulé ou non-réticulé.

Dans un mode de réalisation préféré de l'invention, le deuxième polymère (P2) est non-réticulé. Dans ce cas, le RIP est un réseau dit « semi-interpénétré de polymères » : semi-RIP (en anglais semi-IPN). Le deuxième polymère peut être linéaire ou ramifié.

La synthèse des RIP sous forme de latex est connue depuis de nombreuses années et familière à l'homme du métier. Elle est décrite par exemple dans le brevet US 3,833,404.

Selon l'invention, le RIP peut être synthétisé de la manière suivante :
- formation d'une dispersion aqueuse d'un premier polymère (P1) réticulé par polymérisation en émulsion, ledit premier polymère présentant de préférence une Tg supérieure à -30°C, en particulier supérieure à -20°C,
- incorporation de monomères avec ou sans agent de réticulation dans le premier polymère réticulé, les monomères incorporés dans le premier polymère gonflent celui-ci, puis polymérisent afin de former le deuxième polymère du réseau interpénétré de polymères ayant une Tg inférieure à -40°C, de préférence inférieure à -50°C.

Lorsque la deuxième étape de polymérisation est mise en œuvre en présence de co-monomères de réticulation, elle conduit à un deuxième polymère (P2) réticulé et à la formation d'un RIP.

Lorsque la deuxième étape de polymérisation est mise en œuvre en absence de co-monomère de réticulation, le deuxième polymère (P2) ne sera pas réticulé et il se formera un semi-RIP.

L'enchevêtrement local des chaînes du premier polymère (P1) avec les chaînes du deuxième polymère (P2) ayant une Tg inférieure à celle du premier polymère, permet de conférer au (semi)-RIP ainsi formé une Tg intermédiaire entre celle du premier polymère et celle du deuxième polymère.

De préférence, la différence entre la Tg du premier polymère (P1) et la Tg du deuxième polymère (P2) est comprise entre 10°C et 60°C, de préférence entre 20°C et 50°C.

Selon l'invention, la température de transition vitreuse (Tg) est mesurée par analyse calorimétrie différentielle à balayage (en anglais, DSC pour *Differential Scanning Calorimetry*). La température de transition vitreuse est déterminée à l'aide de la méthode du point milieu telle que décrite dans la norme ASTM-D-3418 pour la calorimétrie différentielle à balayage. L'appareil de mesure utilisé par la demanderesse est le modèle Discovery DSC de TA Instruments.

On peut en principe utiliser pour la synthèse des premier et deuxième polymères formant le réseau interpénétré de polymère n'importe quel mélange de comonomères capable de copolymériser par polymérisation radicalaire. L'équation de Fox (T.G. Fox, Bull. Am. Phys. Soc. 1, 123 (1956)) permet à l'homme du métier de sélectionner les comonomères et leurs proportions dans le mélange réactionnel pour arriver à un copolymère ayant la température de transition vitreuse souhaitée.

On peut citer à titre d'exemples de monomères copolymérisables en émulsion ceux choisis dans le groupe formé par l'acrylate de méthyle, le méthacrylate de méthyle, l'acrylate d'éthyle, le méthacrylate d'éthyle, l'acrylate de propyle, le méthacrylate de propyle, l'acrylate d'isopropyle, le méthacrylate d'isopropyle, l'acrylate de butyle, le méthacrylate de butyle, l'acrylate d'isobutyle, le méthacrylate d'isobutyle, l'acrylate de tert-butyle, le méthacrylate de tert-butyle, l'acrylate de pentyle, le méthacrylate de pentyle, l'acrylate d'isoamyle, le méthacrylate d'isoamyle, l'acrylate d'hexyle, le méthacrylate d'hexyle, l'acrylate de cyclohexyle, le méthacrylate de cyclohexyle, l'acrylate d'octyle, le méthacrylate d'octyle, l'acrylate d'isooctyle, le méthacrylate d'isooctyle, l'acrylate de nonyle, le méthacrylate de nonyle, l'acrylate d'isononyle, le méthacrylate d'isononyle, l'acrylate de décyle, le méthacrylate de décyle, l'acrylate de dodécyle, le méthacrylate de dodécyle, l'acrylate de tridécyle, le méthacrylate de tridécyle, l'acrylate de hexadécyle, le méthacrylate d'hexadécyle, l'acrylate d'octadécyle, le méthacrylate d'octadécyle, l'acrylate de 2-éthylhexyle, le méthacrylate de 2-éthylhexyle, le formate de vinyle, l'acétate de vinyle, le propionate de vinyle, l'acrylate de 2-hydroxyéthyle, le méthacrylate d'hydroxyéthyle, l'acrylate de 2-hydroxypropyle, le méthacrylate de 2-hydroxypropyle, le styrène et l'acrylonitrile.

Les comonomères de réticulation sont par exemple le phthalate de diallyle, le cyanurate de triallyle, le diacrylate d'éthylène glycol, le diméthacrylate d'éthylène glycol, le diacrylate de 1,4-butanediol, le diméthacrylate de 1,4-butanediol, le diacrylate de 1,6-hexanediol, le diméthacrylate de 1,6-hexanediol, le diacrylate de diéthylène glycol, le diméthacrylate de diéthylène glycol, l'acrylate d'allyle, le méthacrylate d'allyle.

On ajoute avantageusement aux monomères insolubles dans l'eau une petite fraction, généralement moins de 5 % en poids, de comonomères hydrosolubles qui vont copolymériser avec les monomères insolubles dans l'eau ou polymériser séparément et former des polymères qui s'adsorbent à la surface des particules de latex.

Ces monomères solubles dans l'eau sont de préférence des acides, généralement des acides carboxyliques, et sont choisis de préférence dans le groupe constitué d'acide méthacrylique, acide acrylique, acide itaconique et acide fumarique. La présence des charges anioniques à la surface augmente la stabilité colloïdale des latex.

La polymérisation en émulsion est mise en œuvre de manière connue en présence d'un agent émulsifiant, de préférence en présence d'un tensioactif non ionique, comme par exemple un ester de polyoxyéthylèneglycol.

De manière connue, les amorceurs utilisables dans la polymérisation radicalaire en émulsion doivent être solubles dans la phase aqueuse du mélange réactionnel. On peut citer à titre d'exemples de peroxydes hydrosolubles les peroxydes minéraux, tels que le peroxyde d'hydrogène ou le persulfate d'ammonium ou de potassium. On peut également ajouter à l'amorceur un agent réducteur tel que le sulfate ferreux (FeSO₃), qui facilite la formation de radicaux.

En particulier, la couche interne de l'intercalaire tri-couche selon l'invention est obtenue par dépôt d'un latex comprenant des particules polymériques présentant une structure noyau-enveloppe telle que décrite ci-dessus, sur une des faces d'une première feuille de PVB ou d'EVA, puis par séchage dudit latex. Lors du séchage dudit latex, l'eau ou la phase aqueuse disparaît :
- les noyaux des particules polymériques du latex deviennent les nanodomaines polymériques formant la première phase discontinue et présentant une Tg comprise entre -50°C et -30°C ; ces nanodomaines présentent en conséquence les mêmes caractéristiques que les noyaux des particules du latex décrits précédemment, et
- grâce aux enveloppes à basse Tg, les particules polymériques du latex coalescent forment alors une deuxième phase continue polymérique, appelée matrice, qui entoure lesdits nanodomaines de la première phase.

Les inventeurs ont constaté avec surprise que la coalescence des particules polymériques de latex ayant les caractéristiques telles que définies précédemment et conduisant à la formation des deux dites phases polymériques conférait à la couche nanocomposite adhésive du cœur ainsi formée de bonnes propriétés d'amortissement vibratoire, contribuant notamment à une isolation acoustique améliorée du vitrage feuilleté avec cet intercalaire par rapport à un vitrage feuilleté avec un intercalaire tricouche dont la couche interne est une couche de PVB à faible taux résiduel de groupes hydroxyle.

Cette amélioration de l'isolation acoustique est due à un facteur de perte tan δ (déterminé par analyse mécanique dynamique) de la couche interne d'un intercalaire tri-couche selon l'invention, dont la valeur est supérieure ou égale à 1,6, de préférence supérieure ou égale à 2, en particulier supérieure ou égale à 3, voire même supérieure ou égale à 4 sur la décade de fréquence comprise entre 1 kHz et 10 kHz, de préférence sur l'intervalle de fréquence comprise entre 1 Hz et 10 kHz, pour une gamme de température comprise entre 0°C et 40°C, de préférence entre 10°C et 30°C, plus préférentiellement comprise entre 15°C et 25°C et encore plus préférentiellement pour une température voisine ou égale à 20°C.

Ainsi, il a été constaté de manière surprenante par les inventeurs que la structure noyau-enveloppe des particules polymériques du latex telle que décrite précédemment permettent, lorsque lesdites particules coalescent après séchage dudit latex dans un intercalaire tri-couche selon l'invention, d'obtenir des facteurs de perte compris entre 4 et 5 pour la couche interne dudit intercalaire, soit 4 fois à 6 fois plus que pour une couche interne de PVB classique.

Le facteur de perte tan δ d'un matériau correspond au ratio entre l'énergie dissipée sous forme calorique et l'énergie de déformation élastique. Il correspond donc à une caractéristique technique propre à la nature d'un matériau et traduit sa capacité à dissiper l'énergie, en particulier les ondes acoustiques. Plus le facteur de perte est fort, plus l'énergie dissipée est importante, plus le matériau joue donc sa fonction d'amortissement vibratoire. Ce facteur de perte tan δ varie en fonction de la température et de la fréquence de l'onde incidente. Pour une fréquence donnée, le facteur de perte atteint sa valeur maximale à une température, dite température de transition vitreuse déterminée par analyse mécanique dynamique. Ce facteur de perte tan δ peut être estimé à l'aide d'un rhéomètre ou de tout autre dispositif connu adéquat. Le rhéomètre est un appareil qui permet de soumettre un échantillon de matériau à des sollicitations de déformation dans des conditions précises de températures et de fréquences, et ainsi d'obtenir et de traiter l'ensemble des grandeurs rhéologiques caractérisant le matériau. Plus précisément, le facteur de perte est mesuré à l'aide d'un rhéomètre à rotation en mode oscillation, où l'échantillon est soumis à une contrainte sinusoïdale pour des vitesses angulaires ω de 1 à 1000 rad/s dans une plage de température allant de -100°C à 100°C avec des paliers tous les 5°C. Le rhéomètre utilisé par la Demanderesse est le modèle MCR 302 de la marque Anton Paar. A noter que le facteur de perte tan δ de la couche interne détermine le facteur de perte tan δ de l'intercalaire, qui est sensiblement de même valeur, tant que la fraction volumique de la couche interne n'est pas trop faible.

Ainsi la mise en œuvre d'un intercalaire avec une couche interne qui présente un facteur de perte tan δ relativement plus élevé permet d'améliorer d'autant plus les performances d'isolation acoustique du vitrage qui en est doté.

Dans un mode de réalisation préféré selon l'invention, les nanodomaines RIP de la première phase du cœur de l'intercalaire tri-couche présentent un diamètre équivalent moyen en nombre compris entre 10 et 1000 nm, de préférence entre 20 et 400 nm et idéalement entre 30 et 250 nm. Ledit diamètre est mesuré à l'aide d'un appareil de diffusion dynamique de la lumière (en anglais, *dynamic light scattering* ou DLS) qui est une technique d'analyse spectroscopique non destructive permettant d'accéder à la taille de particules en suspension dans un liquide ou de chaînes de polymère en solution de 1 à 5000 nm de diamètre environ. L'appareil de mesure utilisé par la demanderesse est le modèle Zetasizer Nano Series de Malvern Instruments. La faible taille des nanodomaines permet de limiter la diffusion de la lumière par les nanodomaines et d'augmenter la transparence de la couche interne de l'intercalaire tri-couche selon l'invention.

La différence entre l'indice de réfraction de la première phase (n₁) et l'indice de réfraction de la deuxième phase (n₂) est de préférence inférieure à 0,2, de préférence inférieure à 0,1, et idéalement inférieure à 0,05. Les indices de réfractions n₁ et n₂ sont avantageusement compris entre 1,40 et 1,60, de préférence entre 1,45 et 1,55. La valeur respective de ces indices de réfractions permet de réduire les réflexions de la lumière aux interfaces entre le noyau et de l'enveloppe et de réduire ainsi la diffusion de la lumière par la couche de cœur améliorant au final la transparence du verre feuilleté.

Selon un aspect particulier de l'invention, le rapport du volume de la première phase au volume de la deuxième phase dans la couche interne de l'intercalaire tri-couche est compris entre 20/80 et 80/20, de préférence entre 30/70 et 70/30.

Le polymère formant la matrice entourant lesdits nanodomaines est de préférence identique au deuxième polymère (P2) formant le réseau polymère interpénétré de la première phase. Ce polymère peut être un copolymère acrylique comprenant au moins un monomère acrylique.

Selon un mode de réalisation, la couche nanocomposite adhésive de l'intercalaire tri-couche selon l'invention comprend en outre un agent tackifiant et/ou un agent plastifiant. L'ajout d'agent tackifiant et/ou d'agent plastifiant permet d'améliorer l'amortissement vibratoire sur la décade de fréquence entre 1 kHz et 10 kHz, de préférence sur l'intervalle de fréquence comprise entre 1 Hz et 10 kHz, pour une température comprise entre 0°C et 40°C, d'augmenter la valeur du facteur de perte au-delà de 4, et d'aider à la coalescence des enveloppes de particules lors du séchage du latex et enfin d'améliorer les propriétés d'adhésion de la couche de cœur aux couches de PVB. Le tackifiant peut être choisi parmi les résines tackifiantes naturelles, notamment les colophanes et les terpènes et les résines tackifiantes synthétiques comme les résines aliphatiques, aromatiques et hydrogénées issues du pétrole.

De préférence, le tackifiant utilisé est un terpène modifié pour être transparent et incolore présentant un indice de Gardner strictement inférieur à 1 sur l'échelle de couleur Garner, telle que le Crystazene 110 produit par l'entreprise DRT. La quantité de tackifiant peut être comprise entre 1% et 8% en poids, par rapport au poids total de latex, de préférence entre 2% et 5% en poids.

Dans un mode de réalisation préféré, la couche nanocomposite adhésive est directement en contact avec les deux couches externes de PVB dans un intercalaire selon la présente invention.

Selon un aspect particulier de l'invention, l'épaisseur de la couche interne nanocomposite adhésive selon l'invention a de préférence une épaisseur comprise entre 5 et 50 micromètres, préférentiellement entre 10 et 30 micromètres. La mise en œuvre d'un cœur dont l'épaisseur est de l'ordre du micromètre permet de réduire les risques d'écoulement du latex constituant le cœur au moment de son dépôt. Cette épaisseur permet également d'ajuster la rigidité de l'intercalaire tri-couche afin d'obtenir une rigidité à l'échelle du vitrage feuilleté respectant les contraintes de formage, de courbure du vitrage final feuilleté et d'assurer la sécurité des passagers ou des occupants en cas de bris du verre feuilleté.

L'épaisseur des couches externes de PVB dans un intercalaire tri-couche selon l'invention peut être comprise entre 200 et 500 micromètres, préférentiellement entre 300 et 400 micromètres, idéalement autour de 380 micromètres.

Selon un aspect particulier de l'invention, la couche interne représente une fraction volumique de l'intercalaire comprise entre 0,2% et 8%, préférentiellement entre 0,5% et 8%, préférentiellement entre 2,5 % et 4%. La sélection d'une telle valeur de fraction volumique de la couche interne sur l'intercalaire offre un compromis satisfaisant entre l'exigence de rigidité d'une part et la performance de l'isolation acoustique d'autre part.

L'invention concerne également un procédé de fabrication d'un intercalaire viscoélastique pour verres feuilletés, comprenant les étapes suivantes :
- fourniture d'une première feuille en un matériau choisi parmi le poly(butyral de vinyle) (PVB) et le poly(éthylène-acétate de vinyle) (EVA),
- dépôt sur une des faces de la dite première feuille d'un latex comprenant des particules polymériques présentant une structure noyau-enveloppe où
   - le noyau est formé d'un réseau interpénétré de polymères (RIP) ayant une Tg comprise entre -50°C et -30°C, de préférence entre -45°C et -35°C, et
   - l'enveloppe est formée d'un polymère ayant une Tg inférieure à celle dudit noyau, de préférence une Tg inférieure à -50°C, et plus préférentiellement inférieure à -60°C;
- séchage du latex de manière à former une couche nanocomposite adhésive;
- application sur la couche nanocomposite adhésive ainsi formée d'une deuxième feuille en un matériau choisi parmi le poly(butyral de vinyle) (PVB) et le poly(éthylène-acétate de vinyle) (EVA).

Le dépôt d'un latex sur une des faces de la dite première feuille de PVB a lieu de préférence par le procédé connu de dépôt par voie liquide de rouleau à rouleau, plus précisément par le procédé de coucheuse à rouleaux inversés alimentée par le latex via une fente (en anglais *nip-fed reverse roll*).

L'étape de séchage est réalisée de préférence en continue, à température ambiante et/ou dans un four à une température comprise entre 40°C et 120°C, de préférence entre 60°C et 100°C. Avantageusement, cette étape de séchage est réalisée sous une pression réduite comprise entre 0,01 atm et 1 atm, préférentiellement entre 0,1 atm et 0,5 atm, idéalement à une pression égale à 0,25 atm. Une seconde feuille de PVB est ensuite déposée au-dessus du film issu du séchage du latex.

Les paramètres du procédé tels que la tension des feuilles de PVB dans le procédé et la stabilité des rouleaux et de l'alimentation du latex par la fente peuvent être contrôlés de telle manière à ce que l'intercalaire tri-couche selon l'invention ne présente pas de défauts d'ondulation.

L'invention concerne également un vitrage feuilleté comprenant :
- une première feuille de verre,
- une deuxième feuille de verre,
- un intercalaire tel que décrit ci-dessus, l'intercalaire étant agencé entre la première et la deuxième feuille de verre.

Selon un aspect particulier de l'invention, ladite première feuille de verre a une épaisseur comprise entre 0,5 et 3 mm, préférentiellement entre 1,4 et 2,1 mm, et ladite deuxième feuille de verre a une épaisseur comprise entre 0,5 et 2,1 mm, préférentiellement entre 1,1 et 1,6 mm.

Les avantages techniques conférés par un intercalaire selon l'invention, tels qu'ils sont décrits dans le présent texte, se rapportent également à un vitrage feuilleté contenant un tel intercalaire. Ainsi la Demanderesse propose un vitrage feuilleté comprenant un intercalaire particulier tel que décrit ci-dessus possédant de bonnes propriétés d'amortissement vibratoire sur la décade de fréquence comprise entre 1 kHz et 10 kHz, de préférence sur l'intervalle de fréquence comprise entre 1 Hz et 10 kHz pour une gamme de température comprise entre 0°C et 40°C, de préférence comprise entre 10°C et 30°C, plus préférentiellement comprise entre 15°C et 25°C, et encore plus préférentiellement pour une température voisine ou égale à 20°C; pour laquelle ledit vitrage feuilleté est utilisé.

L'intercalaire selon l'invention peut en outre :
- être teinté dans la masse sur une partie de sa surface, pour permettre un respect de l'intimité des personnes à l'intérieur d'un véhicule ou encore pour protéger le conducteur d'un véhicule contre l'éblouissement à la lumière du soleil ou simplement pour un effet esthétique, et/ou
- avoir une section transversale diminuant en forme en coin du haut vers le bas du vitrage feuilleté pour permettre au vitrage feuilleté d'être utilisé comme écran de système de visualisation tête haute (appelé HUD ou Head Up Display), et/ou
- comprendre des particules avec une fonction de filtre au rayonnement infrarouge pour limiter la hausse de température à l'intérieur d'un véhicule due au rayonnement infrarouge du soleil, pour améliorer le confort des passagers du véhicule ou des occupants du bâtiment.

L'invention concerne également l'utilisation d'un vitrage feuilleté tel que décrit ci-dessus comme pare-brise de véhicule et/ou comme vitrage de bâtiment pour amortir les vibrations et les bruits d'origine solidienne entre 1 Hz et 1000 Hz et/ou augmenter la perte de transmission aux bruits d'origine aérienne sur la décade de fréquence audible comprise entre 1 kHz et 10 kHz. Dans le cas où le vitrage selon l'invention est utilisé comme pare-brise, il satisfait de bien entendu à toutes les conditions du règlement No. 43 des Nations Unies (dit règlement R43) de résistance aux chocs durs pour assurer sa résistance mécanique.

## Revendications

1. Intercalaire pour verres feuilletés comprenant deux couches externes en un matériau choisi parmi le poly(butyral de vinyle) (PVB) et le poly(éthylène-acétate de vinyle) (EVA), assemblées au moyen d'une couche nanocomposite adhésive comprenant :
- une première phase discontinue constituée de nanodomaines polymériques présentant une température de transition vitreuse (Tg) comprise entre -50°C et -30°C, de préférence entre -45°C et -35°C, et
- une deuxième phase continue polymérique, appelée matrice, présentant une température de transition vitreuse (Tg) inférieure à celle de ladite première phase, de préférence une Tg inférieure à -50°C, et plus préférentiellement inférieure à -60°C, la première phase étant dispersée dans la deuxième phase;
la Tg étant déterminée à l'aide de la méthode du point milieu telle que décrite dans la norme ASTM-D-3418 pour la calorimétrie différentielle à balayage.

2. Intercalaire pour verres feuilletés selon la revendication 1, **caractérisé en ce que** les deux couches externes sont des couches de poly(butyral de vinyle) (PVB).

3. Intercalaire selon la revendication 1 ou 2, dans lequel les nanodomaines de la première phase sont formés d'un réseau interpénétré de polymères (RIP) comprenant un premier polymère (P1) réticulé et un deuxième polymère (P2) réticulé ou non-réticulé.

4. Intercalaire selon l'une quelconque des revendications précédentes, dans lequel les nanodomaines formant la première phase présentent un diamètre équivalent moyen en nombre compris entre 10 et 1000 nm, de préférence entre 20 et 400 nm et idéalement entre 30 et 250 nm.

5. Intercalaire selon l'une quelconque des revendications précédentes, dans lequel ladite couche nanocomposite adhésive a une épaisseur comprise entre 5 et 50 micromètres, de préférence entre 10 et 30 micromètres.

6. Intercalaire selon la revendication 3, dans lequel le deuxième polymère (P2) est non-réticulé.

7. Intercalaire l'une quelconque des revendications 3 à 6, dans lequel le premier polymère (P1) présente une Tg supérieure à -30°C, de préférence supérieure à -20°C.

8. Intercalaire l'une quelconque des revendications 3 à 6, dans lequel le deuxième polymère (P2) présente une Tg inférieure à -50°C, de préférence inférieure à -60°C.

9. Intercalaire selon les revendications 7 et 8, dans lequel la différence entre la Tg du premier polymère (P1) et la Tg du deuxième polymère (P2) est comprise entre 10°C et 60°C, de préférence entre 20°C et 50°C.

10. Intercalaire selon l'une quelconque des revendications 3 à 9, dans lequel les polymères P1 et P2 sont des copolymères acryliques comprenant au moins un monomère acrylique.

11. Intercalaire selon l'une quelconque des revendications précédentes, dans lequel la différence entre l'indice de réfraction de la première phase (n₁) et l'indice de réfraction de la deuxième phase (n₂) est inférieure à 0,2, de préférence inférieure à 0,1, et idéalement inférieure à 0,05.

12. Intercalaire selon l'une quelconque des revendications précédentes, dans lequel la couche nanocomposite adhésive est directement en contact avec les deux couches externes.

13. Intercalaire selon l'une quelconque des revendications précédentes, dans lequel le rapport du volume de la première phase au volume de la deuxième phase est compris entre 20/80 et 80/20, de préférence entre 30/70 et 70/30.

14. Procédé de fabrication d'un intercalaire pour verres feuilletés, comprenant les étapes suivantes :
- fourniture d'une première feuille en un matériau choisi parmi le poly(butyral de vinyle) (PVB) et le poly(éthylène-acétate de vinyle) (EVA),
- dépôt sur une des faces de la dite première feuille d'un latex comprenant des particules polymériques présentant une structure noyau-enveloppe où
- le noyau est formé d'un réseau interpénétré de polymères (RIP) ayant une Tg comprise entre -50°C et -30°C, de préférence entre -45°C et -35°C, et
- l'enveloppe est formée d'un polymère ayant une Tg inférieure à celle dudit noyau, de préférence une Tg inférieure à -50°C, et plus préférentiellement inférieure à -60°C;
- séchage du latex de manière à former une couche nanocomposite adhésive;
- application sur la couche nanocomposite adhésive ainsi formée d'une deuxième feuille en un matériau choisi parmi le poly(butyral de vinyle) (PVB) et le poly(éthylène-acétate de vinyle) (EVA).

15. Procédé de fabrication d'un intercalaire pour verres feuilletés selon la revendication 14, dans lequel l'étape de séchage est réalisée à température ambiante et/ou dans un four à une température comprise entre 40°C et 120°C, de préférence entre 60°C et 100°C.

16. Vitrage feuilleté comprenant :
- une première feuille de verre,
- une deuxième feuille de verre,
- un intercalaire selon les revendications 1 à 13, l'intercalaire étant agencé entre la première et la deuxième feuille de verre.

## Patentansprüche

1. Zwischenlage für Verbundgläser, umfassend zwei äußere Schichten aus einem aus Poly(vinylbutyral) (PVB) und Poly(ethylenvinylacetat) (EVA) ausgewählten Material, die mittels einer klebenden Nanokompositschicht zusammengefügt sind, umfassend:
- eine erste diskontinuierliche Phase, bestehend aus polymeren Nanodomänen, die eine Glasübergangstemperatur (Tg) zwischen -50 °C und -30 °C, vorzugsweise zwischen -45 °C und -35 °C, aufweisen, und
- eine zweite kontinuierliche polymere Phase, die als Matrix bezeichnet wird und eine Glasübergangstemperatur (Tg) aufweist, die niedriger als die der ersten Phase ist, vorzugsweise eine Tg niedriger als -50 °C und mehr bevorzugt niedriger als -60 °C, wobei die erste Phase in der zweiten Phase dispergiert ist;
wobei die Tg mit Hilfe des Mittelpunktverfahrens gemäß der Norm ASTM-D-3418 für dynamische Differenzkalorimetrie bestimmt wird.

2. Zwischenlage für Verbundgläser nach Anspruch 1,
**dadurch gekennzeichnet, dass** die zwei äußeren Schichten aus Poly(vinylbutyral) (PVB) bestehen.

3. Zwischenlage nach Anspruch 1 oder 2, wobei die Nanodomänen der ersten Phase aus einem interpenetrierenden Netzwerk von Polymeren (RIP) gebildet sind, umfassend ein vernetztes erstes Polymer (P1) und ein vernetztes oder unvernetztes zweites Polymer (P2).

4. Zwischenlage nach einem der vorstehenden Ansprüche, wobei die Nanodomänen, die die erste Phase bilden, einen zahlenmittleren äquivalenten Durchmesser zwischen 10 und 1000 nm, vorzugsweise zwischen 20 und 400 nm und idealerweise zwischen 30 und 250 nm, aufweisen.

5. Zwischenlage nach einem der vorstehenden Ansprüche, wobei die klebende Nanokompositschicht eine Dicke zwischen 5 und 50 Mikrometern, vorzugsweise zwischen 10 und 30 Mikrometern, aufweist.

6. Zwischenlage nach Anspruch 3, wobei das zweite Polymer (P2) unvernetzt ist.

7. Zwischenlage nach einem der Ansprüche 3 bis 6, wobei das erste Polymer (P1) eine Tg höher als -30 °C, vorzugsweise höher als -20 °C, aufweist.

8. Zwischenlage nach einem der Ansprüche 3 bis 6, wobei das zweite Polymer (P2) eine Tg niedriger als -50 °, vorzugsweise niedriger als -60 °C, aufweist.

9. Zwischenlage nach einem der Ansprüche 7 und 8, wobei die Differenz zwischen der Tg des ersten Polymers (P1) und der Tg des zweiten Polymers (P2) zwischen 10 °C und 60 °C, vorzugsweise zwischen 20 °C und 50 °C, liegt.

10. Zwischenlage nach einem der Ansprüche 3 bis 9, wobei die Polymere P1 und P2 Acrylcopolymere sind, umfassend mindestens ein Acrylmonomer.

11. Zwischenlage nach einem der vorstehenden Ansprüche, wobei die Differenz zwischen dem Brechungsindex der ersten Phase (n₁) und dem Brechungsindex der zweiten Phase (n₂) niedriger als 0,2, vorzugsweise niedriger als 0,1 und idealerweise niedriger als 0,05 ist.

12. Zwischenlage nach einem der vorstehenden Ansprüche, wobei die klebende Nanokompositschicht direkt in Kontakt mit den zwei äußeren Schichten steht.

13. Zwischenlage nach einem der vorstehenden Ansprüche, wobei das Verhältnis des Volumens der ersten Phase zum Volumen der zweiten Phase zwischen 20/80 und 80/20, vorzugsweise zwischen 30/70 und 70/30, liegt.

14. Verfahren zum Herstellen einer Zwischenlage für Verbundgläser, umfassend die folgenden Schritte:
- Bereitstellen einer ersten Scheibe aus einem Material, das aus Poly(vinylbutyral) (PVB) und Poly(ethylenvinylacetat) (EVA) ausgewählt ist,
- Aufbringen eines Latex, umfassend Polymerpartikel, die eine Kern-Hülle-Struktur aufweisen, auf eine der Seiten der ersten Scheibe, wobei
- der Kern aus einem interpenetrierenden Netzwerk von Polymeren (RIP) mit einer Tg zwischen -50 °C und -30 °C, vorzugsweise zwischen -45 °C und - 35 °C, gebildet ist und
- die Hülle aus einem Polymer mit einer Tg gebildet ist, die niedriger als die des Kerns ist, vorzugsweise mit einer Tg niedriger als -50 °C und mehr bevorzugt niedriger als -60 °C;
- Trocknen des Latex, um eine klebende Nanokompositschicht zu bilden;
- Aufbringen einer zweiten Scheibe aus einem Material, das aus Poly(vinylbutyral) (PVB) und Poly(ethylenvinylacetat) (EVA) ausgewählt ist, auf die so gebildete klebende Nanokompositschicht.

15. Verfahren zum Herstellen einer Zwischenlage für Verbundgläser nach Anspruch 14, wobei der Trocknungsschritt bei Raumtemperatur und/oder in einem Ofen bei einer Temperatur zwischen 40 °C und 120 °C, vorzugsweise zwischen 60 °C und 100 °C, durchgeführt wird.

16. Verbundverglasung, umfassend:
- eine erste Glasscheibe,
- eine zweite Glasscheibe,
- eine Zwischenlage nach einem der Ansprüche 1 bis 13, wobei die Zwischenlage zwischen der ersten und der zweiten Glasscheibe angeordnet ist.

## Claims

1. An interlayer for laminated glasses, comprising two outer layers of a material selected from poly(vinyl butyral) (PVB) and poly(ethylene-vinyl acetate) (EVA), assembled by means of an adhesive nanocomposite layer comprising:
- a first, discontinuous phase consisting of polymeric nanodomains having a glass transition temperature (Tg) of between -50°C and -30°C, preferably between -45°C and -35°C, and
- a second, continuous polymeric phase, referred to as the matrix, having a glass transition temperature (Tg) lower than that of said first phase, preferably a Tg of less than -50°C, and more preferably less than -60°C,
the first phase being dispersed in the second phase,
the glass transition temperature being determined using the midpoint method as described in standard ASTM-D-3418 for differential scanning calorimetry.

2. The interlayer for laminated glasses as claimed in claim 1, **characterized in that** the two outer layers are layers of poly(vinyl butyral) (PVB).

3. The interlayer as claimed in claim 1 or 2, wherein the nanodomains of the first phase are formed of an interpenetrating polymer network (IPN) comprising a first polymer (P1), which is crosslinked, and a second polymer (P2), which is crosslinked or non-crosslinked.

4. The interlayer as claimed in any of the preceding claims, wherein the nanodomains forming the first phase have a number-average equivalent diameter of between 10 and 1000 nm, preferably between 20 and 400 nm, and ideally between 30 and 250 nm.

5. The interlayer as claimed in any of the preceding claims, wherein said adhesive nanocomposite layer has a thickness of between 5 and 50 micrometers, preferably between 10 and 30 micrometers.

6. The interlayer as claimed in claim 3, wherein the second polymer (P2) is non-crosslinked.

7. The interlayer as claimed in any of claims 3 to 6, wherein the first polymer (P1) has a Tg of greater than -30°C, preferably greater than -20°C.

8. The interlayer as claimed in any of claims 3 to 6, wherein the second polymer (P2) has a Tg of less than -50°C, preferably less than -60°C.

9. The interlayer as claimed in claims 7 and 8, wherein the difference between the Tg of the first polymer (P1) and the Tg of the second polymer (P2) is between 10°C and 60°C, preferably between 20°C and 50°C.

10. The interlayer as claimed in any of claims 3 to 9, wherein the polymers P1 and P2 are acrylic copolymers, comprising at least one acrylic monomer.

11. The interlayer as claimed in any of the preceding claims, wherein the difference between the refractive index of the first phase (n₁) and the refractive index of the second phase (n₂) is less than 0.2, preferably less than 0.1, and ideally less than 0.05.

12. The interlayer as claimed in any of the preceding claims, wherein the adhesive nanocomposite layer is directly in contact with the two outer layers.

13. The interlayer as claimed in any of the preceding claims, wherein the ratio of the volume of the first phase to the volume of the second phase is between 20/80 and 80/20, preferably between 30/70 and 70/30.

14. A method for manufacturing an interlayer for laminated glasses, comprising the following steps:
- supplying a first sheet of a material selected from poly(vinyl butyral) (PVB) and poly(ethylene-vinyl acetate) (EVA),
- applying to one of the faces of said first sheet a latex comprising polymeric particles having a core-shell structure in which
- the core is formed of an interpenetrating polymer network (IPN) having a Tg of between -50°C and -30°C, preferably between -45°C and -35°C, and
- the shell is formed of a polymer having a Tg of less than that of said core, preferably a Tg of less than -50°C, and more preferably less than -60°C;
- drying the latex to form an adhesive nanocomposite layer;
- applying to the resultant adhesive nanocomposite layer a second sheet of a material selected from poly(vinyl butyral) (PVB) and poly(ethylene-vinyl acetate) (EVA).

15. A method for manufacturing an interlayer for laminated glasses, as claimed in claim 14, wherein the drying step is carried out at ambient temperature and/or in an oven at a temperature of between 40°C and 120°C, preferably between 60°C and 100°C.

16. A laminated glazing unit comprising:
- a first glass sheet,
- a second glass sheet,
- an interlayer as claimed in claims 1 to 13, the interlayer being arranged between the first and second glass sheets.
